## Europäisches Patentamt

## European Patent Office

## Office européen des brevets

(19)

(11) Veröffentlichungsnummer: **0 042 142**
**A2**

(12)

# EUROPÄISCHE PATENTANMELDUNG

(21) Anmeldenummer: **81104492.4**

(22) Anmeldetag: **11.06.81**

(51) Int. Cl.³: **B 60 B 1/00**, B 60 B 21/02

(30) Priorität: **13.06.80 CH 4590/80**

(43) Veröffentlichungstag der Anmeldung: **23.12.81**
**Patentblatt 81/51**

(84) Benannte Vertragsstaaten: **AT BE CH DE FR GB IT LI LU NL SE**

(71) Anmelder: **Maier-Moussa, Toni,**
**Postfach 30 Churfirstenweg 4, CH-8410 Winterthur (CH)**

(72) Erfinder: **Maier-Moussa, Toni,**
**Postfach 30 Churfirstenweg 4, CH-8410 Winterthur (CH)**

(74) Vertreter: **Utermann, Gerd, Dipl.-Ing.,**
**Kilianstrasse 7 Kilianspassage Postfach 3525,**
**D-7100 Heilbronn (DE)**

(54) **Fahrradfelge.**

(57)   Eine Fahrradfelge (1) mit einem geschlossenen Profil, aus leichtem Material, wird so ausgebildet, daß die äußere Begrenzung des Felgenquerschnitts in etwa Dreiecksform aufweist und die Höhe (9) des Felgenquerschnitts höchstens $1^1/_2$ mal so groß ist wie seine größte Breite (10). Die Dreiecksseiten sind vorteilhafterweise gekrümmt ausgeführt, wobei die obere Seite, die das Profil des Reifenauflagerings (2) der Felge (1) ist, immer nach innen gewölbt ist. Die beiden anderen Seiten, die durch die Querschnitte von Verbindungsflächen (3) gegeben sind, können nach innen oder nach außen gekrümmt oder gerade sein. Die Felgen können hohl oder voll aus einem beliebigen, für den Felgenbau verwendeten Material ausgebildet sein.

# PATENTANWALT DIPL.-ING. GERD UTERMANN
71 HEILBRONN, POSTFACH 3525, CABLE: PATU, TEL. (07131) 8 28 28

Kilianstraße 7  (Kilianspassage)

Deutsche Bank Heilbronn: 364 364  Handelsbank Heilbronn: 23 080 5  Kreissparkasse Heilbronn: 7001 6  Postscheck Stuttgart: 430 16-704

Europäische Patentanmeldung          A 19 CH. 12 EP 2
9. Juni 81/4S/M

Anmelder:              Herr
Toni Maier-Moussa

Churfirstenweg 4
Postfach        30

CH-8410 Winterthur


Bezeichnung:          Fahrradfelge


Beschreibung:


Die Erfindung betrifft eine Fahrradfelge mit einem geschlossenen Profil, aus leichtem Material, wie sie insbesondere bei
Rennrädern für Bahn oder Straße oder bei anderen leicht zu bauenden Fahrrädern Verwendung findet.

Derartige Felgen weisen ein in etwa rechteckiges Profil auf, mit einem äußeren, nach innen gewölbten Reifenauflagering, einem inneren Speichenbefestigungsring und seitlichen, die Ringe an ihren Seitenflächen miteinander verbindenden, nach innen konvergierenden Verbindungsflächen. Ein derartiger Aufbau ist gewählt, um eine hohe Verwindungssteifigkeit der Felge zu erzielen. Die Felgen sind häufig als Leichtmetallhohlprofile ausgebildet. Dann sind die Ringe und Verbindungsflächen jeweils Wände des Profils. Holz- und Kunststoff-Felgen sind häufig als Vollprofile ausgebildet, mit einem ähnlichen Außenquerschnitt wie bei den Leichtmetall-Hohlprofilen. Stahlfelgen dagegen weisen oft nur einen einzigen Bandring auf, auf den der Reifen aufgelegt wird und an dem auch die Speichen befestigt werden. Es sind auch offene, jedoch keine geschlossenen Hohlprofile bei Stahlfelgen bekannt.

In den letzten Jahren sind hohle Leichtmetallfelgen bekannt geworden, die einen Querschnitt aufweisen, der sich aus einem Kreissektor, nämlich der Querschnittsform des Reifenauflagerings, und einer an diesen angesetzten Halbellipse, die der Speichenbefestigungsring und zugleich die Verbindungsflächen bildet, zusammensetzt. Derartige Felgenprofile werden aus Luftwiderstandsgründen gewählt und zu diesem Zweck ist die Höhe des Felgenprofils regelmäßig erheblich höher, z.B. doppelt bis dreimal so groß wie die Breite des Felgenprofils. Zur Erniedrigung des Luftwiderstandes ist es auch bekannt, an die eigentliche tragende Felge Strömungsleitkörper mit etwa elliptischer oder dreieckiger Form aus leichtem Kunststoff anzusetzen.

Aus Gründen der Gewichtsersparnis wäre es auch für eine Felge aus leichtem Material wünschenswert, nur mit einem Bandring auszukommen. Aus Gründen der Verwindungssteifigkeit ist jedoch ein Hohlprofil oder ein Vollprofil erforderlich, bei dem sich Höhe und Breite nur um Faktoren 2 bis 3 unterscheiden, und bei dem nicht die Höhe erheblich niedriger ist als die Breite, wie bei einem Bandring. Um die Felgen mit rechteckigem Profil leichter auszubilden ist man daher schon dazu übergegangen, die Felgen an zahlreichen Stellen zu durchbohren, was natürlich auf Kosten der Festigkeit der Felge geht und außerdem zu einer Erhöhung des Luftwiderstandes führt.

Der Erfindung liegt die Aufgabe zugrunde, ein Profil für eine Fahrradfelge der oben genannten Art anzugeben, das zu einer sehr leichten, luftwiderstandsarmen Felge mit geringem Trägheitsmoment führt, die trotzdem sehr hohe Verwindungs- und Knickfestigkeit aufweist.

Erfindungsgemäß ist vorgesehen, daß die äußere Begrenzung des Felgenquerschnitts in etwa Dreiecksform aufweist und die Höhe des Felgenquerschnitts höchstens 1 1/2 mal so groß ist wie seine größte Breite. Die eine Seite des dreieckförmigen Profils ist dabei durch den nach innen gewölbten Reifenauflagering und die beiden anderen Seiten sind durch die äußeren Begrenzungen der Verbindungsflächen gegeben. Diese Außenbegrenzung kann dabei völlig geradlinig verlaufen, sie kann jedoch auch nach innen oder nach außen gekrümmt sein, wobei im letzteren Fall die äußeren Begrenzungen der Verbindungsflächen etwa einen halbelliptischen Querschnitt bilden. Der Speichenbefestigungsring ist damit zu einem schmalen Ring zwischen den inneren Abschlüssen der beiden Verbindungsflächen geworden.

Vor allem für Straßenräder, die mit einer Felgenbremse ausgestattet sind, ist es von Vorteil, die Verbindungsflächen konvex, also vom Felgenprofilinnern weg zu krümmen, da dann die Bremsen besonders günstig angreifen können. Zu diesem Zweck ist es besonders vorteilhaft, wenn die Verbindungsflächen in etwa parallel zueinander am Reifenauflagering ansetzen und der Krümmungsradius vom Ansatz am Reifenauflagering zum Ansatz am Speichenbefestigungsring hin abnimmt. In diesem Falle können die Bremsen, in Fahrtrichtung eines Fahrrades gesehen, ziemlich genau horizontal von links und rechts, wie bei einer herkömmlichen Felge angreifen. Dies ergibt eine gute Bremswirkung und erlaubt das direkte Austauschen der vorgeschlagenen Felge gegen eine herkömmliche. Eine konvexe oder konkave Krümmung der Verbindungsflächen ist in Bezug auf die Elastizität der Felge verglichen mit einer Felge mit geradlinigem Querschnitt der Verbindungsflächen von Vorteil.

Besonders günstige Werte für Gewicht und Trägheitsmoment einer vorgeschlagenen Felge ergeben sich dann, wenn die Höhe des Felgenquerschnitts in etwa seiner Breite entspricht. Wenn vor allem auf das Gewicht zu achten ist, so ist eine noch geringere Höhe von Vorteil.

./4

0042142

A 66 ... 11 B: 1
9.Juni 81/IN

- 4 -

Bei Verwendung eines Rennreifens mit genähtem Mantel ist es
von Vorteil, den Reifenauflagering in der Mitte seiner Auflagefläche mit einer umlaufenden Reifennaht-Aufnahmenut zu versehen.
Diese Nut trägt gleichzeitig zu einer weiteren Versteifung der
Felge bei.

Die Erfindung wird im folgenden anhand von durch Figuren veranschaulichten Ausführungsbeispielen näher erläutert.

Es zeigen:

Fig. 1      Einen Schnitt durch eine vorgeschlagene Felge;

Fig. 2      eine prinzipielle Darstellung der die Felge bildenden
            Teile;

Fig. 3      ein prinzipielles Kräfteparallelogramm von auf die
            Felge wirkenden Kräften;

Fig. 4      eine Prinzipdarstellung der Felgenquerschnittsab-
            messungen.

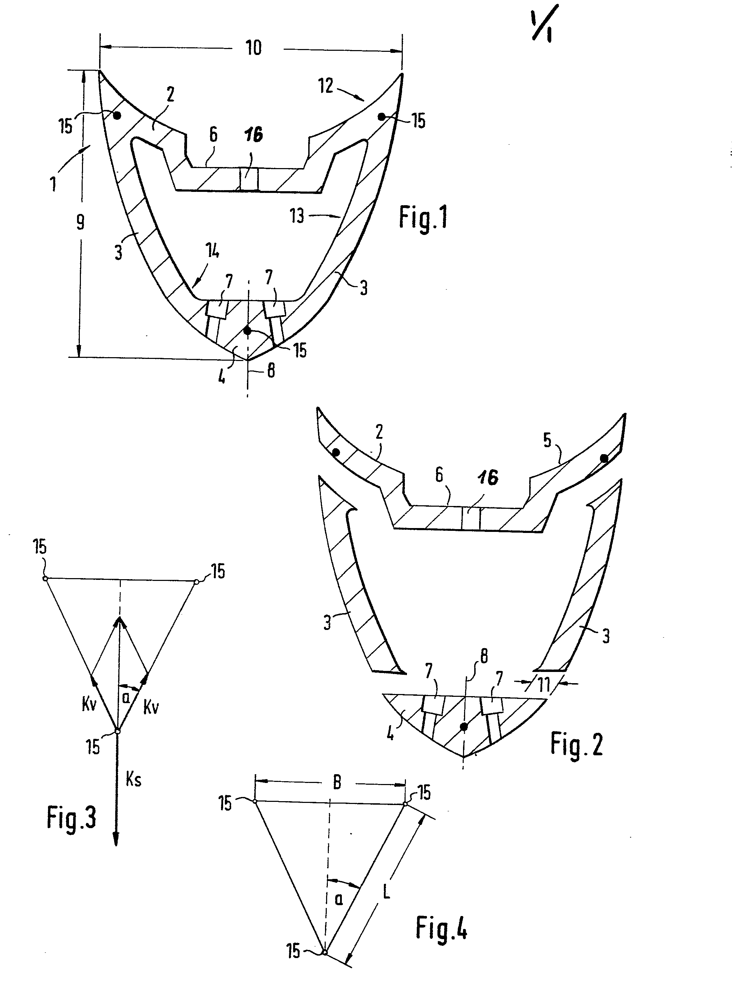

Fig. 1 zeigt den Querschnitt einer vorgeschlagenen hohlen
Fahrradfelge 1 aus Leichtmetall, die z.B. durch Strangpressen
hergestellt ist. Die Felge weist einen Reifenauflagering 2,
zwei Verbindungsflächen 3 und einen Speichenbefestigungsring -
auf. Die genaue Begrenzung der einzelnen Teile gegeneinander
ist natürlich nicht festgelegt, da es sich um ein geschlossenes
Profil handelt. Eine Unterteilung kann jedoch, wie z.B. in
Fig. 2 prinzipiell dargestellt, gedacht sein.

Der Reifenauflagering weist in der Mitte seiner Auflagefläche
5 eine umlaufende Reifennaht-Aufnahmenut 6 auf. Die verdickte
Naht des genähten Reifenmantels hat in dieser Nut Platz, so daß
der Reifen gut auf der Auflagefläche 5 liegen und mit dieser
verklebt werden kann.

Im Speichenbefestigungsring sind zwei schräg verlaufende Speichen-
nippel-Bohrungen 7 eingezeichnet, die zur Befestigung der Speichen

./5

dienen. Die Bohrungen liegen allerdings nicht beide in der Schnittebene, sondern sind gleichmäßig über den Umfang verteilt und nur der Deutlichkeit halber in der Darstellung in einer Ebene, der Schnittebene, gezeichnet. Die Speichennippel-Bohrungen sind außerdem versetzt gegenüber der Mittelachse 8 des Speichenbefestigungsringes 4 gezeichnet. Es ist jedoch auch möglich, daß die Bohrungen ziemlich genau mit der Mittelachse übereinstimmen. Die nicht dargestellten Speichen werden durch Bohrungen 16 im Reifenauflagering 2 in die Speichennippelbohrungen 7 eingeführt.

Die Abmessungen des Profils einer vorgeschlagenen Felge sind etwa wie folgt gewählt. Die Felgenhöhe 9 beträgt etwa 15 mm und die Felgenbreite 10 etwa 16 mm. Die Wanddicke 11 beträgt etwa 1,2 mm. Die Reifennahtaufnahmenut 6 ist 6,5 mm breit und etwa 1,5 mm tief. Der Krümmungsradius 12 des Reifenauflagerings beträgt etwa 10mm, der große Krümmungsradius 13 der Verbindungsfläche in der Nähe ihres Ansatzes an den Reifenauflagering beträgt etwa 25 mm und der kleine Krümmungsradius 14 in der Nähe ihres Ansatzes an den Speichenbefestigungsring ist etwa 9 mm. Im Felgenprofil sind noch 3 Bezugspunkte 15 eingezeichnet und zwar zwei nahe den Enden des Profils des Reifenauflagerings und einer etwa in der Mitte des Profils des Speichenbefestigungsrings. Diese Bezugspunkte 15 seien die Eckpunkte der in den Figuren 3 und 4 dargestellten Dreiecke. An diesen Bezugspunkten und in ihre gegenseitigen Richtungen sollen die auf die Felge wirkenden Kräfte wirken.

Gemäß Fig. 3 wirke auf den untersten Bezugspunkt 15 die Speichenkraft Ks. Diese Kraft wird durch die beiden Verbindungsflächen zum Reifenauflagering geleitet und greife dort an den beiden oberen Bezugspunkten 15 an. Die in den Verbindungsflächen wirkenden Kräfte sind mit Kv dargestellt. Der von der Speichenkraft Ks und einer Kraft in der Verbindungsfläche Kv eingeschlossene Winkel ist mit a bezeichnet. Der Zusammenhang zwischen den Kräften ist dann

$$Kv = 1/2 \, Ks \, (\cos a)^{-1} \qquad (1)$$

Die Wanddicke 11 einer Verbindungsfläche kann umso geringer gewählt werden, je geringer die durch sie übertragene Kraft Kv ist. Dabei besteht Proportionalität zwischen der wirkenden Kraft Kv und der zu wählenden Wanddicke 11. Damit besteht aber auch Proportionalität zwischen dem Felgengewicht und der Kraft Kv bzw. dem Winkel a, so daß für das Felgengewicht G gilt

$$G \sim (\cos a)^{-1} \qquad (2)$$

In Fig. 4 wird verdeutlicht, wie die Länge L einer Verbindungsfläche mit der Breite B zwischen den beiden oberen Bezugspunkten 15 zusammenhängt. Es gilt die Beziehung

$$L = 1/2 \, B \, (\sin a)^{-1} \qquad (3)$$

Bei einer vorgegebenen Wanddicke 11 ist damit das Felgengewicht G in etwa proportional zur Länge L, so daß gilt

$$G \sim (\sin a)^{-1} \qquad (4)$$

Die Zusammenfassung der Gleichungen (2) und (4) ergibt Proportionalität des Felgengewichts G in Abhängigkeit von einer trigonometrischen Funktion und zwar

$$G \sim (\sin a \, \cos a)^{-1} \qquad (5)$$

Diese Funktion besitzt ein Minimum für den Wert a=45°.

Nach dieser vereinfachten Abschätzung ergibt sich also ein minimales Felgengewicht dann, wenn die beiden Verbindungsflächen einen Winkel von etwa 90° einschließen. Dies entspricht einer Höhe 9 der Felge, die die Hälfte der Breite 10 beträgt. Bei dieser vereinfachten Abschätzung sind jedoch verschiedene Umstände nicht berücksichtigt. So wurde z.B. angenommen, daß in den Verbindungsflächen nur auf die oberen Bezugspunkte 15 wirkende Zugkräfte bestehen. Es treten jedoch auch Biegekräfte auf, die umso geringer werden, je geringer der Winkel a wird. Auch kommt es häufig nicht nur auf das Felgengewicht, sondern auch besonders auf das Trägheitsmoment der Felge an, was auch einen günstigeren Wert annimmt, wenn der Winkel a von 90° ausgehend verkleinert wird. Des weiteren gilt die Gleichung (4) nicht exakt, da ja die Breite B vom Winkel a unabhängig ist, das Gewicht aber durch die winkelabhängigen Längen L und die

- 7 -

winkelunabhängige Breite B gegeben ist. Die bisherigen Untersuchungen ergaben gute Werte in Bezug auf hohe Festigkeit, geringes Gewicht und geringes Trägheitsmoment für den Fall, daß die Felgenhöhe in etwa der Felgenbreite entspricht. Übersteigt die Felgenhöhe etwa das Eineinhalbfache der Felgenbreite, so ist keine Gewichtsersparnis mehr gegenüber herkömmlichen Felgen erzielbar.

Wie aus dem Vorstehenden ersichtlich ist, beruht die Form und die Dimensionierung der vorgeschlagenen Felge auf der Überlegung, die auftretenden Kräfte gut über das Felgenprofil zu verteilen und dabei zu einem möglichst geringen Gewicht der Felge zu kommen. Damit bezieht sich die angegebene Felgenform insbesondere auf tragende Teile der Felge. Auch eine Felge, die aus Luftwiderstandsgründen zusätzlich nicht tragende Felgenteile aufweist, jedoch für die tragenden Teile eine Konstruktion gemäß der vorgeschlagenen Felge verwendet, verläßt den Rahmen der Erfindung nicht.

## PATENTANWALT DIPL.-ING. GERD UTERMANN

71 HEILBRONN, POSTFACH 3525, CABLE: PATU, TEL. (07131) 82828
Kilianstraße 7  (Kilianspassage)
Deutsche Bank Heilbronn: 364 364  Handelsbank Heilbronn: 230 80 5  Kreissparkasse Heilbronn: 7001 6  Postscheck Stuttgart: 4301 6·70/

Europäische Patentanmeldung          A 19 CH. 12 EP 2
                                     9. Juni 81/4S/M

Anmelder:               Herr
                        Toni Maier-Moussa

                        Churfirstenweg 4
                        Postfach       30

                        CH-8410 Winterthur

Bezeichnung:            Fahrradfelge

Ansprüche:

1.    Fahrradfelge mit einem geschlossenen Profil, aus leichtem
      Material, mit einem äußeren, nach innen gewölbten Reifer-
      auflagering, einem inneren Speichenbefestigungsring und
      seitlichen, die Ringe an ihren Seitenflächen miteinander
      verbindenden, nach innen konvergierenden Verbindungsflä-
      chen, d a d u r c h  g e k e n n z e i c h n e t,
      daß die äußere Begrenzung des Felgenquerschnitts in etwa
      Dreiecksform aufweist und die Höhe (9) des Felgenquer-
      schnitts höchstens eineinhalt mal so groß ist wie seine
      größte Breite (10).

                                                          ./2

2. Fahrradfelge nach Anspruch 1, d a d u r c h  g e - k e n n z e i c h n e t , daß die Verbindungsflächen (3 ) konvex gekrümmt sind.

3. Fahrradfelge nach Anspruch 2, d a d u r c h  g e - k e n n z e i c h n e t , daß die Verbindungsflächen in etwa parallel zueinander am Reifenauflagering(2) ansetzen, und der Krümmungsradius vom Ansatz am Reifenauflagering 2 zum Ansatz am Speichenbefestigungsring (4) hin abnimmt.

4. Fahrradfelge nach einem der vorstehenden Ansprüche, d a - d u r c h  g e k e n n z e i c h n e t , daß die Höhe (9 des Felgenquerschnitts etwa seiner Breite (10 ) entspricht.

5. Fahrradfelge nach einem der vorstehenden Ansprüche, d a - d u r c h  g e k e n n z e i c h n e t , daß der Reifen- auflagering ( 2 ) in der Mitte seiner Auflagefläche (5 ) eine umlaufende Reifennaht-Aufnahmenut (6 ) aufweist.

0042142

PATENTANWALT DIPL.-ING. GERD UTERMANN
71 HEILBRONN, POSTFACH 3525, CABLE: PATU, TEL. (07131) 8 28 28
Kilianstraße 7 (Kilianspassage)
. Deutsche Bank Heilbronn: 364 364  Handelsbank Heilbronn: 23 080 5  Kreissparkasse Heilbronn: 7001 6  Postscheck Stuttgart: 430 16-704

Europäische Patentanmeldung     A 19 CH. 12 EP 2
                                9. Juni 81/4S/M

Anmelder:        Herr
                 Toni Maier-Moussa

                 Churfirstenweg 4
                 Postfach      30

                 CH-8410 Winterthur

Bezeichnung:     Fahrradfelge


Bezugszeichenliste:


    1   Felge
    2   Reifenauflagering
    3   Verbindungsfläche
    4   Speichenbefestigungsring
    5   Auflagefläche
    6   Reifennaht-Aufnahmenut
    7   Speichennippel-Bohrung
    8   Mittelachse
    9   Felgenhöhe
   10   Felgenbreite
   11   Wanddicke
   12   Reifenauflagering-Krümmungsradius
   13   großer Verbindungsflächen-Krümmungsradius
   14   kleiner Verbindungsflächen-Krümmungsradius
   15   Bezugspunkte
   16   Bohrung

Fig.1

Fig.2

Fig.3

Fig.4